# EUROPEAN PATENT APPLICATION

(11) **EP 2 390 300 A1**
(43) Date of publication of application: **30.11.2011**
(21) Application number: 11167441.2
(22) Date of filing: 25.05.2011
(51) Int. Cl.: C09K 8/512

(54) **Method and Composition for control of water production**

(30) Priority: 27.05.2010 GB 1008843
(71) Applicant: Aubin Limited, Ellon, Scotland AB41 9RF (GB)
(72) Inventor: Collins, Patrick, Ellon, Aberdeenshire AB41 9RF (GB); Walji, Dhiran, Ellon, Aberdeenshire AB41 9RF (GB)
(74) Representative: Watson, Craig Simon

(57) **Abstract**

A method of controlling ingress of water into a production well used to extract fluid hydrocarbons the method comprising the steps of: introducing a composition comprising a polymer, a polar solvent, a cross-linking agent and a base oil into the production well; recovering hydrocarbons from the production well;
wherein the polymer comprises an alcohol moiety. The density of the composition is preferably between 0.92 to 1.00g/cm³ thus naturally being directed to the interface between lower density oil and higher density water. Moreover the viscosity of the composition is preferably between 200 to 500 sec⁻¹ centipoise at a shear rate of 113 sec⁻¹ and at a temperature of 20 °C and so can flow preferentially into water bearing regions of the reservoir thus further aiding water shut-off. Embodiments of the present invention are particularly suitable for use in recovering unconventional hydrocarbon reservoirs such as tar sands.

## Description

This invention relates to a method of controlling the ingress of water into a production well.

Treatments to control the ingress of water into a production well are known and are used to enhance oil recovery by reducing the rate of water influx by mechanically or chemically blocking water channels. These techniques are often referred to as water shut-off techniques.

Certain known treatments are moderately effective in wells producing lighter hydrocarbons, but especially ineffective for improving the recovery of heavy, viscous crude oil from reservoirs such as those located in Canada, United States and many other parts of the world. These fields are shallow, low temperature typically from 25 to 45 °C, and often have low reservoir pressure. The oil produced has a viscosity typically in the range of 2,000 - 20,000 centipoise at 25 °C. Although the permeability of the reservoirs may be good, production is from largely unconsolidated sands. The wells are normally produced using simple cavity displacement pumps.

Production from wells producing heavy, viscous crude oil often follows a common pattern. Initially production is entirely of crude oil with rates typically between 50-100 barrels of oil per day. After a comparatively short period of time, typically four to six months, water from an underlying aquifer can break through into the well. Water has a much lower viscosity compared to crude oil and therefore has a much higher relative permeability in the reservoir. The water will therefore normally be produced in preference to the oil. Once this water "breakthrough" has occurred, oil production rates fall almost immediately to 3-5 barrels per day, often rendering the well uneconomical, with the well often being abandoned despite the fact that perhaps only 20 to 25% of the oil in place has been recovered.

In some cases poor consolidation of the reservoir can result in the production of large quantities of sand that causes long tubular-like structures known as "wormholes". When these link back into the aquifer, production can switch almost overnight to total water production.

Such production is known as Cold Heavy Oil Production or CHOP when it involves the deliberate production of sand it is known as Cold Heavy Oil Production with Sand (CHOPS).

Most of the chemicals used for water shut-off are polymeric gels or their pre-gel form (gellants). In use these gels enter some of the cracks and pathways, displacing the water. Once the gels set in the cracks, some of the water movement is blocked, allowing oil to flow from the well. The specific details for selecting the gel and release are determined by the type of water flow targeted. Commonly polyacrylamide gels cross linked by transition metal ions such as chromium III are employed (this technology is known as 'Maracit' and was developed by Sydansk at Marathon Oil.)

Injection of these polymers is however limited to the size of the pore walls and the high viscosity of the polymer solution making penetration into water zones difficult, increasing the potential for the shut off chemicals to block oil producing zones.

Once formed, polyacrylamide gels are very difficult to break, causing concerns over formation damage resulting in reduced oil production. The use of heavy transition metal salts also causes environmental concerns.

A disadvantage of certain known polymer gel treatments which use transition metals, is that older wells may have a significant build up of iron sulphide or various types of scale. If this residual material is not precleaned prior to polymer injection, problems arise through several mechanisms. The polymeric fluid being viscous and sticky can pick up unwanted residue and carry them into the reservoir, resulting in plugging of flow channels near to the wellbore. Iron within the iron sulphide can also cause premature gellation, over cross-linking and loss of integrity of the gel structure resulting in deterioration.

According to one aspect of the present invention, there is provided a method of controlling ingress of water into a production well used to extract fluid hydrocarbons the method comprising the steps of:
(i) introducing a low viscosity composition comprising a polymer, a polar solvent, a cross-linking agent and a base oil into the production well such that the composition reacts to form a gel blocking at least a portion of a reservoir;
(ii) recovering hydrocarbons from the production well;
wherein the polymer comprises an alcohol moiety.

Typically the well comprises at least one production zone, and typically the water is formation water.

The polar solvent is normally water.

Typically the gel is an impermeable gel.

For certain embodiments the production well may be isolated for between 1 hour and 1 week after the introduction of the composition and before the recovery of the hydrocarbons. Optionally the well may be isolated for between 12 hours and 3 days after the introduction of the composition and before the recovery of the hydrocarbons.

The method can be used to control the ingress of water into wells and reservoirs especially wells provided in low temperature reservoirs. These low temperature reservoirs have a temperature typically in the range of 20 to 50°C.

Typically the method of controlling ingress of water into a production well is a method of inhibiting ingress of water into a production well.

According to a second aspect of the invention there is provided a composition comprising a polymer, the polymer comprising an alcohol moiety, and a cross-linking agent.

Preferably the composition according to the second aspect of the invention is the composition according to the first aspect of the invention. Further references to composition can optionally refer to the first and/or second aspects of the invention.

The weight average molecular weight of the polymer may be in the range 35,000 to 200,000 g/mol. Preferably the weight average molecular weight of the polymer is in the range 45,000 to 200,000 g/mol, especially 50,000 to 80,000 g/mol.

Typically the polymer also functions as a water thickening agent, although other water thickening agents may be added. The composition may also comprise an emulsifying agent and/or a base oil. The emulsifying agent may also function as an activator.

The base oil typically comprises a mixture of C₈ - C₃₆, preferably C₁₄ -C₃₀ optionally substituted hydrocarbons such as a polyalphaolefin. Preferred embodiments comprise hydrocarbons such as C₁₄ to C₃₀ alkanes. Oils marketed for drilling fluid applications are typically suitable. Diesel is one suitable base oil. Another suitable base oil mixture is sold under the brand Clairsol™ 350M HF available from Petrochem Carless, Antwerp, Belgium.

The base oil may be a polyalphaolefin, or preferably other low toxicity mineral oil with between 14 and 20 carbon atoms.

Preferably a biodegradable base oil is used.

Preferably the base oil has less than 5wt% aromatics, more preferably less than 3wt% aromatics. Preferably the base oil is not crude oil. The cross-linking agent may include an O or an S atom, preferably an O atom.

The cross-linking agent may comprise an aldehyde for example glyoxalin, glutaraldehyde; phthaldehyde; terephthaldehyde; succinaldehyde and paraformaldehyde. The cross-linking agent may comprise an amide for example formamide.

One particularly suitable cross-linking agent is teraphaldehyde.

The emulsifying agent may have between 14 and 30 carbon atoms and may be any suitable emulsifying agent, such as a phosphate ester, for example Surfactant P 208 from J&W Whewell of Manchester, UK.

The composition may comprise between 2 and 40% by weight of polymer; between 0.1 and 10 % by weight emulsifying agent; and between 0.01 and 1 % by weight of cross-linking agent.

The polymer may be cross-linked in the presence of an organic carbonyl compound, with an organic or an inorganic Lewis and/or Brönsted acid. Thus the composition may include an acid, optionally between 0.1 and 10% by weight of acid. The acid may be one of those mentioned in US 6,730,718 the disclosure of which is incorporated herein in its entirety by reference, providing a pH range of between 2 and 6. Preferably the acid behaves as a Brönsted acid, hydrolysing the aldehyde group. The acid may be selected from the group consisting of at least one of phosphoric acid, p-toluenesulphonic acid and sulphuric acid.

The polymer comprises an alcohol moiety and may comprise diol units, such as 1,3-diols or 1,2-diols.

The polymer may be, for example, an ethanol homopolymer; or a propanol homopolymer. Preferably the polymer is an ethanol homopolymer.

The concentration of the polymer in the composition may be in the range 1 to 40wt%, preferably 2 to 30wt% and more preferably in the range 5 to 15wt%.

The ethanol homopolymer may have a viscosity in the range of 100 to 1000, preferably 200 to 500 sec⁻¹ centipoise at a shear rate of 113 sec⁻¹ measured on a Fann 35 rheometer with a B2 bob, at a temperature of 20 degrees centigrade. Thus for certain embodiments the composition may provide a water-soluble gel system capable of being pumped.

Thus embodiments of the invention benefit in that the viscosity is less than conventional compositions and so the compositions will more readily enter cracks in the rock formation.

Without wishing to be bound by theory, it is considered that preferred embodiments may adequately cross-link at lower viscosities because of the degree of saponification. Saponification is the degree to which an acetate has converted to -OH groups. In the present invention, typically more than 50% of acetate groups have converted to OH groups, preferably at least 90mol%, more preferably at least 95mol% more preferably at least 99%; especially essentially all of the acetate groups have converted to -OH groups. To measure the degree of saponification ASTM method D94 was used.

Thus embodiments of the invention provide a composition that can access water channels, blocking off the flow of water displaced into cracks and openings beyond the wellbore, especially in newly formed wormholes and so can allow certain wells to produce hydrocarbons at a much larger rate or volume.

An important advantage of certain embodiments of the invention is that the composition may preferentially flow into water bearing zones, channels or ."wormholes" in the rock formation due, it is thought, to the low viscosity of the composition compared to the crude oil. Moreover these cracks were typically areas of relatively high water saturation due, it is thought, to the relative viscosity of water compared to oil.

Preferably the composition having between 4 and 15wt% of the polymer has a density in the range of 0.92 to 1.00g/cm³.

The density of the water is typically in the range of 0.99 to 1.00g/cm³.

The density of the medium and heavy crude oil is typically in the range of 0.87 to 0.92g/cm³
A further benefit of embodiments of the present invention is that the density of the composition is lower than that of water but greater than oil. This means that the composition will be expected to locate itself preferentially between the oil and the water within the reservoir forming a barrier between the two fluids. This is particularly beneficial in reservoirs characterised by high porosity and permeability. In contrast known gelling compositions have a density slightly greater than water. Thus such embodiments of the present invention will move to the oil water interface under gravity further improving water shut off effectiveness.

An advantage of certain embodiments is that the viscosity of the water shut off polymer gel mixture prior to gelling is greater than water but less than the oil at reservoir temperatures and pressures such that it will preferentially displace the water occupying those parts of the near well bore formation prior to forming a cross-linked gel creating a blockage which prevents or delays the further ingress of water into the well thereby increasing the recovery of oil from the near wellbore formation.

The polymer and/or gel composition may be modified to suit specific conditions. Varying the gelling time and cross-linking agent controls the structural integrity of the set polymers.

The setting time of the polymer may be controlled by the concentration and/or quantity of cross-linking agent used and the type of cross linking agent employed.

An advantage of certain embodiments of the invention is that the viscosity of the composition reduces the risk that scale or other deposits will be picked up by the composition during introduction to the well. Thus the problems associated with contaminants in the gel, such as iron sulphide, are mitigated for certain embodiments of the invention.

During use of certain embodiments, the composition may initially be provided as a two part-system, where the first part comprises the polymer and the second part comprises the cross-linking agent. The two parts can be combined shortly before introducing the composition into the production well which will start the cross-linking process which will, after a period of time, form a gel. In this context "shortly before" typically means up to 3 hours before being introduced to the production well, but may be longer. Preferably the first part also comprises at least one of, more preferably both of, a base oil as described herein and an emulsifying agent also as described herein. Optionally the second part further comprises an emulsifying agent as described herein and preferably also a Brönsted acid as described herein.

Thus for certain embodiments the ethanol homopolymer and base oil constitutes the first component and a soluble aldehyde based organic cross-linker together with acid, preferably Brönsted acid, accounts for the second component and can be charged simultaneously to generate a gellable polymer suitable for water-shut off conditions. Furthermore, the two-part system can be transported and blended on-site followed by application to the effected zone due to the low viscosity exhibited by the developed polymer system.

Methods according to the invention are particularly suitable for use in recovering oil from unconsolidated heavy oil fields, that is oilfields that produce oil with a density typically of between 0.92 to 1.00 grams/cm³ and a viscosity greater than 10 centipoise and typically greater than 1,000, often greater than 2,000 centipoise measured at 25 °C.. These normally have a relatively high porosity and limited mechanical strength. Such production is known in Canada as CHOP (Cold Heavy Oil Production) or CHOPS (Cold Heavy Oil Production with Sand).

Embodiments of the invention also provide a means of controlling the setting times and rheological behaviour of the gel to assist in the placement of the mixture prior to its reacting to form a gel of varying the ratios of acid, cross-linking agent and polymer; by varying the chemistry of the cross-linking agent; and/or by varying the molecular weight of the polymer.

In certain situations the gel may need to be removed. Unlike known water shut off polymers, embodiments of the present invention may be removed by addition of an oxidising agent. Thus the alcohol units can be cleaved to yield aldehyde functionalities. Suitable periodic acids and other reagents are disclosed in US 4,154,912 the disclosure of which is incorporated herein in its entirety by reference. A preferred periodic acid is sodium or potassium periodate or meta periodate.

Thus an advantage of certain embodiments of the present invention is that it may be used in areas where there is an increased risk of shutting off hydrocarbon flow, since the gel may be broken down and removed if it does indeed block hydrocarbon flow.

A further advantage of certain embodiments of the present invention is that they do not include heavy transition metal ions which can be harmful to the environment.

Embodiments of the present invention will now be described, by way of example only, with reference to the accompanying figures, in which:
Fig. 1 is a diagrammatic representation of a laboratory simulated oil reservoir.
Fig. 2 is a chart showing the recoverability of oil from the reservoir after treatment with composition A and composition B compared to a control.
Fig. 3 is a chart showing the total oil recovered from the reservoir after treatment with composition A and composition B compared to the control.
Fig. 4 is a graph showing the oil-to-water ratios of compositions A and B at different treatment stages.
Fig. 5 is a graph showing the viscosity of a composition in accordance with the present invention at different shear rates.

### Example 1

Ethanol homopolymer, with a molecular weight of 150,000 to 200,000 g/mol, was added to water to form a 6% by weight solution and the mixture heated to allow the polymer to dissolve. The solution was then cooled to room temperature and 135g of the aqueous solution added to 15g of mineral paraffinic oil comprising 14 to 20 carbon atoms. The mixture was agitated at room temperature for typically fifteen minutes. The polymer solution was then charged with 7.5g of 15% phosphoric acid containing 0.09g glutaraldehyde. Further agitation for ten minutes followed by leaving the aqueous solution at room temperature for approximately thirty minutes yielded a gel with medium gel strength.

### Example 2

An aqueous solution of 6% by weight ethanol homopolymer as prepared in example 1 (135g) was added to 15g of mineral paraffinic oil comprising 14 to 20 carbon atoms. The mixture was agitated at room temperature before being charged with 7.5g of 15% phosphoric acid containing 0.16g glutaraldehyde. Agitation for 15 seconds at room temperature yielded an instant gel with brittle gel strength.

### Example 3

An aqueous solution of 6% by weight ethanol homopolymer as prepared in example 1 [135g] was added to 14g of mineral paraffinic oil comprising 14 to 20 carbon atoms. The mixture was agitated at room temperature before being charged with 7.0g of 15% phosphoric acid containing 0.18g terephthaldehyde. Agitation for 5 minutes at room temperature, followed by leaving the aqueous solution at room temperature for approximately 1 hour and 10 minutes, yielded a gel with medium/hard gel strength.

Varying the concentration and quantity of cross-linking agent can influence the setting time of the gel as shown in the examples. The setting time can be tailored to suit the specific conditions.

In order to demonstrate the reversibility of the gellation, a 1 % warm solution of periodic acid (10mL) and a medium gel (4.70g), as prepared in example 1, were cleaved to yield the diol units. The cross-linked polymer gel dissolved in 25 minutes. Thus in use, this not only ensures break-up of the polymer, but allows the reservoir to be left in its natural state. Importantly, any reduction in oil flow caused by use of the gel can be mitigated.

To apply the composition to a well, the composition can be transported to a remote site as separate components, and then mixed using an in-line mixer or blending tank before being applied directly to the area of water breakthrough using the suitable apparatus, such as a pump unit or coiled tubing unit.

In one embodiment, the mixture of ethanol homopolymer, mineral oil and emulsifying agent creates a stable emulsion which can be transported to the treatment site. The cross-linking agent and acid components can then be added to provide to create a mixture resulting in an appropriate polymer gel within a known period of time. The gelling rate can be controlled by varying the concentration of gelling agent, the pH and the temperature. So for deeper warmer reservoirs a reduction in the gelling agent concentration and an increase in pH would be necessary to maintain the rate of gelling.

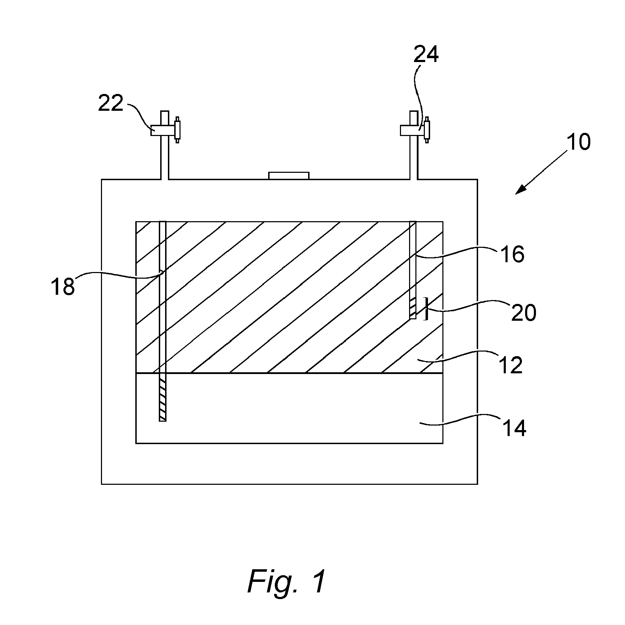

Gellable compositions were tested for their water shut-off properties using a laboratory based reservoir 10 as shown in Figure 1.

The reservoir comprises an oil bearing zone 12 comprising coarse sand and substantially oil; and a water bearing zone 14 comprising coarse sand and substantially water. The crude oil has a viscosity of 29 centipoises at 20 centigrade. The reservoir was fitted with an injection well 18 through which seawater was pumped into the lower portion to simulate a natural aquifer water drive. The reservoir was also fitted with a production well 16 comprising a quarter-inch diameter pipe sealed at one end, the pipe having small slits 20 cut into the side of the pipe to simulate perforations. The production well 16 was set such that the perforations were held within the upper third of the reservoir 10. Shut-off valves 22, 24 were fitted to reduce the leakage of fluids from the pressurized reservoir 10 and various compositions in accordance with the present invention were injected through the production well 16 to ensure immediate contact with the newly formed water channel. One side of the reservoir 10 was transparent (constructed from Perspex™ glass) to allow visual examination of the fluid flow.

Tests were first conducted using a control, without introducing a polymer. Water was used to simulate any increased oil recovery caused by the treatment that was not as a direct result of the specific polymer used.
In all cases the first treatment involved pumping water into the injection well 18 at the same rate as the control until produced water/oil ratio exceeded 90%. At this stage a given quantity of the composition was pumped into the reservoir via the production well and was shut in for a day. Water flooding was recommenced and oil recovered. This process was carried out a number of times. Two different concentrations of polymer 4% and 6% were evaluated.

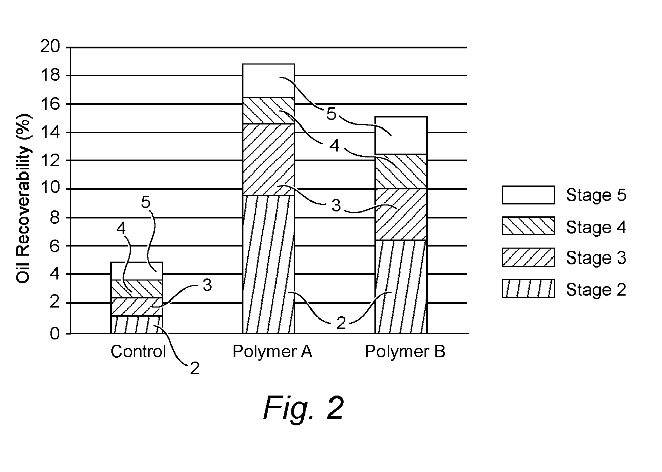

The results of this experiment are shown in Figure 2. The first stages of oil recovery without any treatment, are not shown. The purpose of these studies was to identify the effect the polymer may have on the ability to close off the water saturated zone and increase oil recovery.

The results indicate that repeated treatment of the production well at each stage with the compositions of polymers, followed by well shut-in for a period of two days, provided good to excellent oil recoverability.

Compositions A and B each comprise a 9:1 ratio of polyvinylalcohol (PVA) and base oil. The PVA is sourced from Nippon Gohsei under the product code NH 18. The base oil is sourced from Petrochem Carless, Antwerp, Belgium, under the product name Clairsol™ 350.

To 100 parts of the PVA/base oil mix, 5 parts of activator P208 (supplied by J & W Whewell, Manchester, UK) were added and to 100g of the PVA/base oil mix, 0.2g of crosslinker terephaldehyde was added.

For composition A, the PVA was supplied as a 4% solution in water, whilst for composition B, the PVA used was a 6% solution in water.

After the first treatment using composition A, oil recovery increased by almost 10% (stage 2) compared with the control. The volume of oil recovered at stage 3 then halved to approximately 5%, which is significantly more than the 1 % recovery observed during the control experiment. The final two stages of the treatment gave almost twice the oil recovery of 4% compared to only 2% during the control. This indicates the versatility of composition A.

After the first treatment using composition B, an extra 5% oil was recovered compared to the control. Although, composition B shows lower oil recoverability than composition A, there is a consistently higher oil recovery achieved at each stage, with little sign of recovery decreasing at the final stages 4 and 5. During stages 3 and 4, oil recovery was 7%, greater compared to the control experiment at 2%.

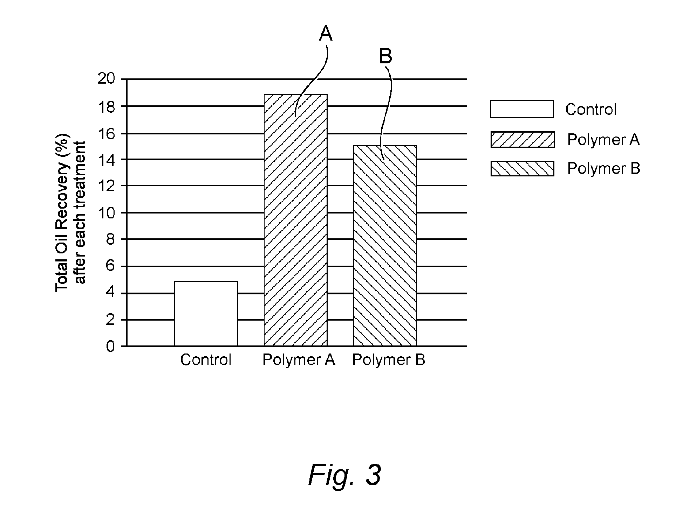

This demonstrates the effectiveness of both water-shut off compositions A and B and the ability of the polymers to perform effectively in closing-off water saturated channels. Figure 3 illustrates how oil recovery was increased by between 10 and15% using the compositions A and B.

Both compositions A and B substantially improve oil recoverability, however, controlling the levels of water break-through into the oil producing well is also an important factor.

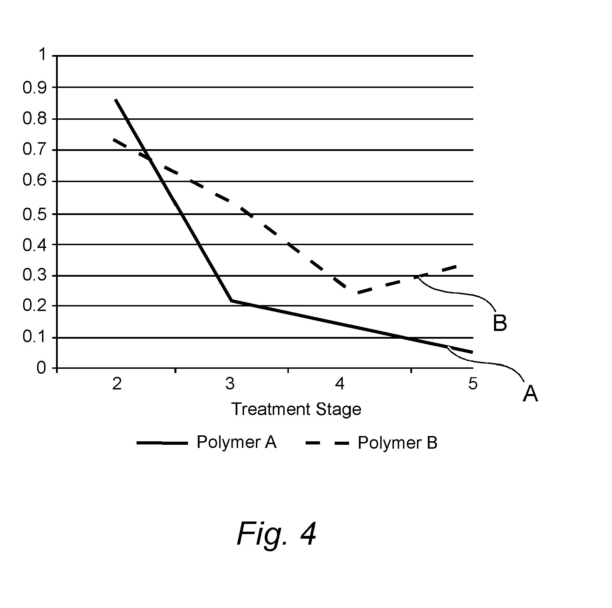

Figure 4 shows composition B is most effective at reducing the influx or ingress of water during crude oil recovery, providing the opportunity to carry out additional treatments. The results for composition B indicate more oil-to-water recovery compared to composition A. During stage 2 of oil recovery, both compositions are found to provide similar oil recovery , with an equal ratio of oil-to-water being observed. The ratio is greater in stages 3 and 5, where composition B shows good potential to reduce the level of water and increase oil recoverability.

To break down the gel, the production well 16 was treated with a 3% w/w solution of NaIO₄ sodium periodate breaker-fluid, followed by injection of seawater. An aqueous polymeric residue was then obtained from the production well under pressure. This illustrated not only that complete removal of the polymer gel was possible, but also the reservoir could be restored to its natural state.

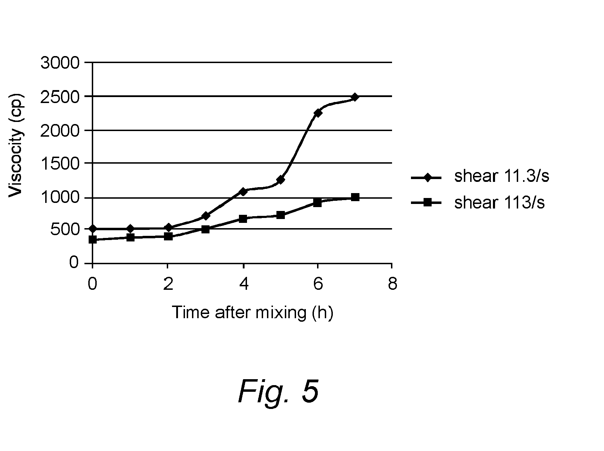

Fig. 5 shows the viscosity properties of a further composition in accordance with the present invention, measured on a Fann 35 rheometer with a B2 bob.

The further composition comprises a 9:1 ratio of polyvinylalcohol (PVA) and base oil where the PVA is supplied as a 10% solution in water. The PVA was sourced from Nippon Gohsei under the product code NM 11 and the base oil from Clairsol™ 350, *supra.*

To 100 parts of the PVA/base oil mix, 1 part of activator P208 (supplied by J&W Whewell, *supra)* was added and to 100g of the PVA/base oil, 0.25g of the crosslinker glutaraldehyde was added.

Fig. 5 shows that at a higher shear rate of 113s-1 the viscosity is below 1000cP for over 7 hours whilst at a lower shear rate of 11.3s⁻¹, the viscosity starts to significantly increase after 5 hours reaching 2500 cP after 7 hours. Thus the composition may be pumped into the well under such high shear conditions, and when *in situ* in the reservoir formation, at much lower shear rates, it will then become much more viscous and form a gel.

Improvements and modifications may be made without departing from the scope of the invention.

## Claims

1. A method of controlling ingress of water into a production well used to extract fluid hydrocarbons the method comprising the steps of:
introducing a composition comprising a polymer, a polar solvent, a cross-linking agent and a base oil into the production well such that the composition reacts to form a gel blocking at least a portion of a reservoir;
recovering hydrocarbons from the production well;
wherein the polymer comprises an alcohol moiety.

2. A method as claimed in claim 1, wherein the production well is isolated for between 1 hour and 1 week after the introduction of the composition and before the recovery of the hydrocarbons, optionally between 12 hours and 3 days.

3. A method as claimed in either preceding claim, used to control the ingress of water into wells having a bottom hole temperature (BHT) in the range of 20 to 50°C.

4. The method as claimed in either preceding claim, used in recovering oil from unconsolidated heavy oil fields, that is oilfields that produce oil with a density typically of between 0.92 to 1.00 grams/cm³ and a viscosity of between 1,000 and 25,000 centipoise at 25 °C, optionally 2,000 and 25,000 centipoise at 25 °C.

5. A method as claimed in any preceding claim, wherein the polymer comprising the alcohol moiety which has diol units, such as 1,3-diols or 1,2-diols.

6. A method as claimed in any preceding claim, wherein the polymer is an ethanol homopolymer or a propanol homopolymer, preferably an ethanol homopolymer.

7. A method as claimed in any preceding claim, wherein the weight average molecular weight of the polymer is in the range 40,000 to 150,000 g/mol.

8. A method as claimed in any preceding claim, wherein the cross-linking agent comprises an aldehyde such as one selected from the list consisting of glyoxalin, glutaraldehyde; phthaldehyde; terephthaldehyde; succinaldehyde and paraformaldehyde; especially teraphaldehyde.

9. A method as claimed in any preceding claim, wherein the base oil comprises hydrocarbons such as C₁₄ to C₃₀ alkanes, optionally C₁₄ to C₂₀, and preferably the base oil has less than 5wt% aromatics, alternatively less than 3wt% aromatics and more preferably the base oil is not crude oil.

10. A method as claimed in any preceding claim, wherein the composition comprises between 2 and 40% by weight of polymer; between 0.1 and 10 % by weight emulsifying agent; between 0.01 and 1% by weight of cross-linking agent and between 5 wt% and 20 wt% base oil.

11. A method as claimed in any preceding claim, wherein the composition has a viscosity in the range of 10 to 500, preferably 20 to 300 sec⁻¹ centipoise at a shear rate of 113 sec⁻¹ measured on a Fann 35 rheometer with a B2 bob, at a temperature of 20 °C.

12. A method as claimed in any preceding claim, wherein the composition, comprising between 4 and 15wt% of the polymer, has a density in the range of 0.94 to 1.00g/cm³.

13. A method as claimed in any preceding claim, wherein more than 50% of acetate groups on the polymer have converted to -OH groups, preferably at least 90 mol%, more preferably at least 95mol% and even more preferably at least 99% of the acetate groups have converted to -OH groups.

14. A method as claimed in any preceding claim, wherein the composition includes an acid, optionally between 0.1 and 10% by weight of acid and the acid is selected from the group consisting of phosphoric acid, p-toluenesulphonic acid and sulphuric acid.

15. A method as claimed in any preceding claim, wherein the gel is removed by addition of an oxidising agent.

16. A composition comprising a polymer, a cross-linking agent, a base oil and a polar solvent, wherein the polymer comprises an alcohol moiety.
